# EUROPEAN PATENT APPLICATION

(11) **EP 4 284 089 A1**
(43) Date of publication of application: **29.11.2023**
(21) Application number: 21921059.8
(22) Date of filing: 22.01.2021
(51) Int. Cl.: H04W 72/04, H04W 48/16

(54) **TERMINAL, COMMUNICATION METHOD, AND WIRELESS COMMUNICATION SYSTEM**

(71) Applicant: NTT DOCOMO, INC., Tokyo 100-6150 (JP)
(72) Inventor: KUMAGAI, Shinya, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2021/002332
(87) International publication number: WO 2022/157950

(57) **Abstract**

A terminal includes a receiving unit that receives configuration information to change, in a cell group, a cell for transmitting uplink control information; a control unit that sets, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission; and a transmitting unit that transmits the uplink control information via the cell set by the control unit, at the timing to transmit the uplink control information.

## Description

### [Technical Field]

The present invention relates to a terminal and a base station in a radio communication system.

### [Background Art]

In the 3rd Generation Partnership Project (3GPP), a study on a radio communication system referred to as 5G or New Radio (NR) (in the following, the radio communication system is referred to as "NR") has been advanced, in order to achieve a further increase in system capacity, a further increase in a data transmission rate, a further reduction of latency in a radio section, and the like. In 5G, in order to meet the requirements that, while achieving a throughput of greater than or equal to 10 Gbps, latency in the radio section is reduced to be less than or equal to 1 ms, various radio technologies and various types of network architecture have been studied.

What is known as "PUCCH carrier switching" is being studied for the extension of Ultra-Reliable and Low Latency Communications (URLLC) technology in 3GPP Release 17. The "PUCCH carrier switching" is being studied for the reduction of latency of Hybrid Automatic Repeat reQuest-ACKnowledgement (HARQ-ACK) feedback in a Time Division Duplex (TDD) method (Non-Patent Document 1).

### [Citation List]

### [Non Patent Literature]

[NPL 1] 3GPP TSG RAN Meeting #88e, RP-201310, Electronic meeting, June 29-July 3, 2020

### [Summary of Invention]

### [Technical Problem]

In the 3GPP meeting, two methods for implementing "PUCCH carrier switching" have been studied. A first method is a method in which a base station dynamically indicates a carrier for transmitting a PUCCH to a terminal. A second method is a method in which a base station semi-statically configures, for a terminal, a carrier for transmitting a PUCCH.

In connection with the implementation of PUCCH carrier switching, there is a need for clarifying an operation or the like of a terminal.

### [Solution to Problem]

According to the disclosed technology, there is provided a terminal including a receiving unit that receives configuration information to change, in a cell group, a cell for transmitting uplink control information; a control unit that sets, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission; and a transmitting unit that transmits the uplink control information via the cell set by the control unit, at the timing to transmit the uplink control information.

### [Advantageous Effects of Invention]

According to the disclosed technology, an operation or the like of a terminal for implementing "PUCCH carrier switching" is clarified.

### [Brief Description of Drawings]

[Fig. 1]

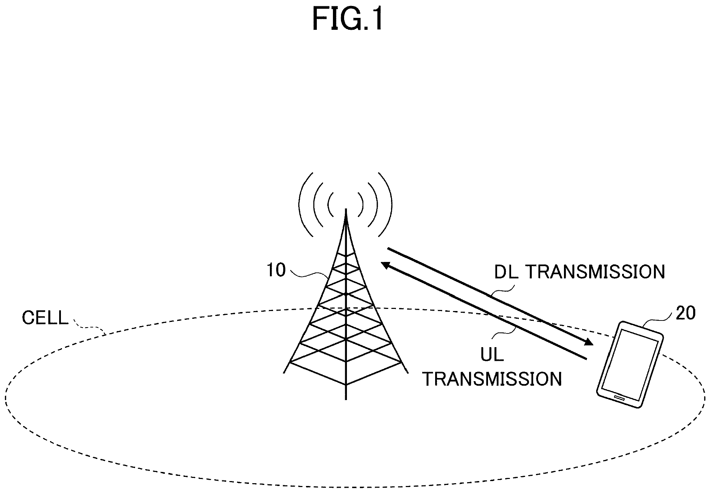

   Fig. 1 is a diagram for illustrating a radio communication system according to an embodiment of the present invention.
[Fig. 2]

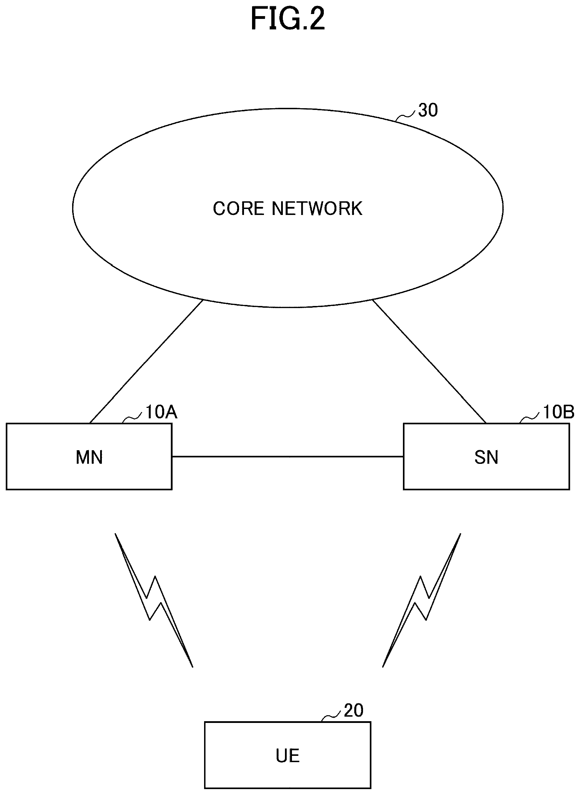

   Fig. 2 is a diagram for illustrating a radio communication system according to an embodiment of the present invention.
[Fig. 3]

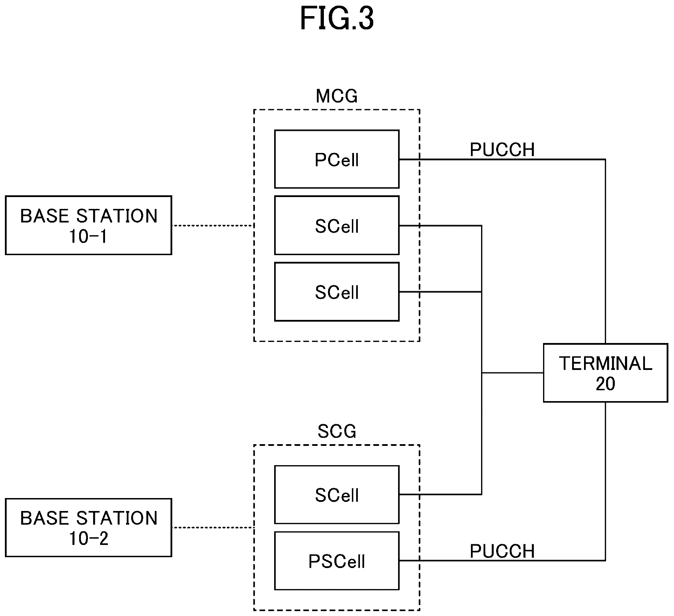

   Fig. 3 is a diagram for illustrating an example of dual connectivity.
[Fig. 4]

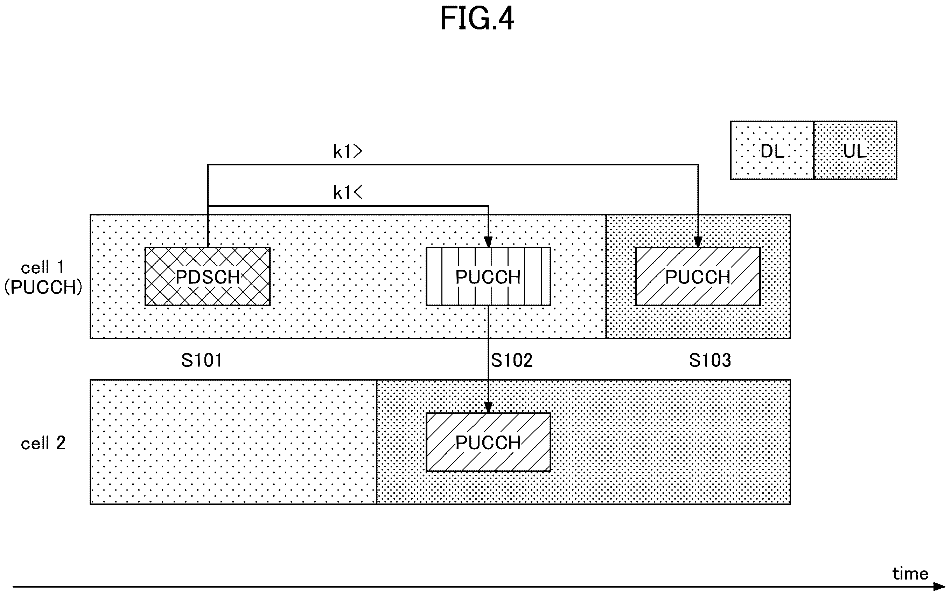

   Fig. 4 is a diagram illustrating an example of PUCCH carrier switching
[Fig. 5]

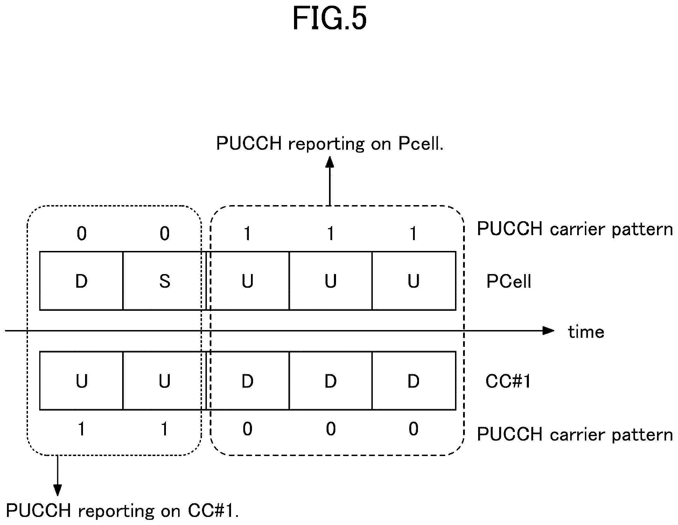

   Fig. 5 is a diagram illustrating an example of a timing pattern.
[Fig. 6]

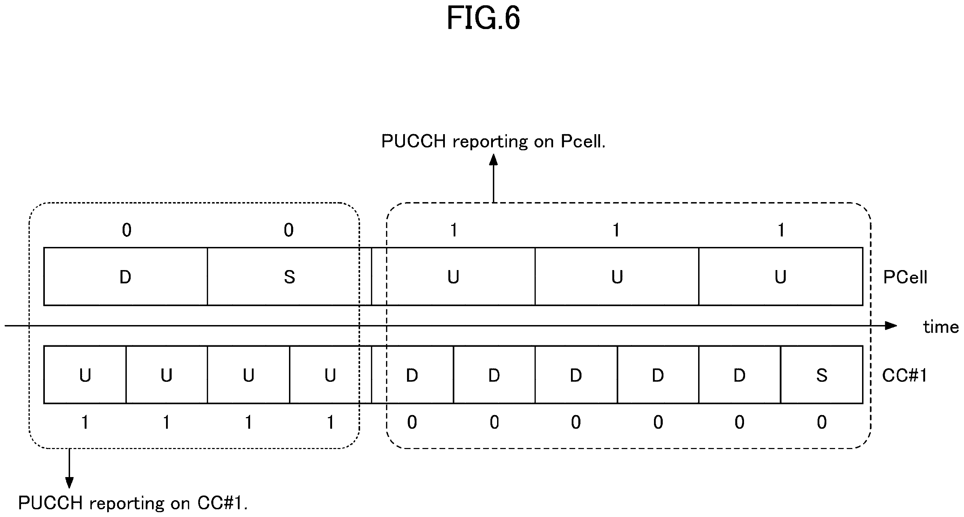

   Fig. 6 is a diagram illustrating an example of a timing pattern.
[Fig. 7]

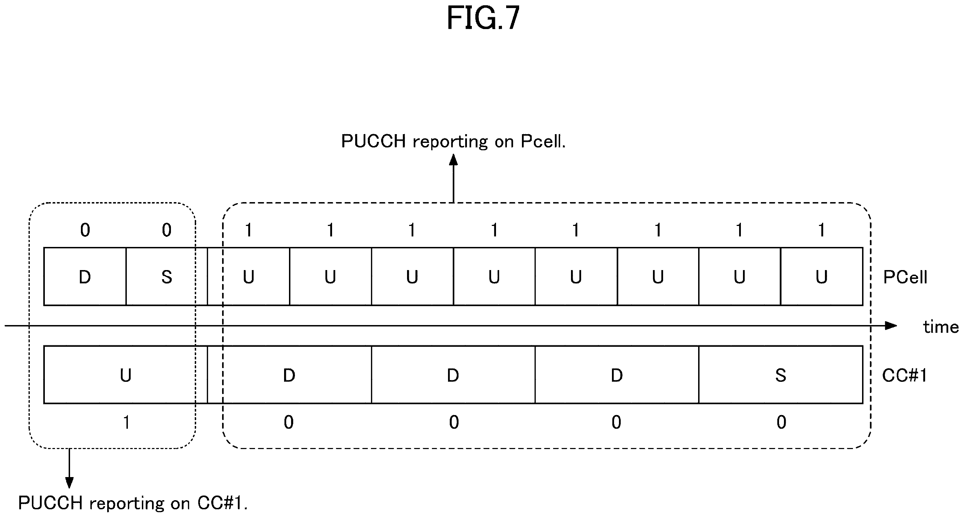

   Fig. 7 is a diagram illustrating an example of a timing pattern.
[Fig. 8]

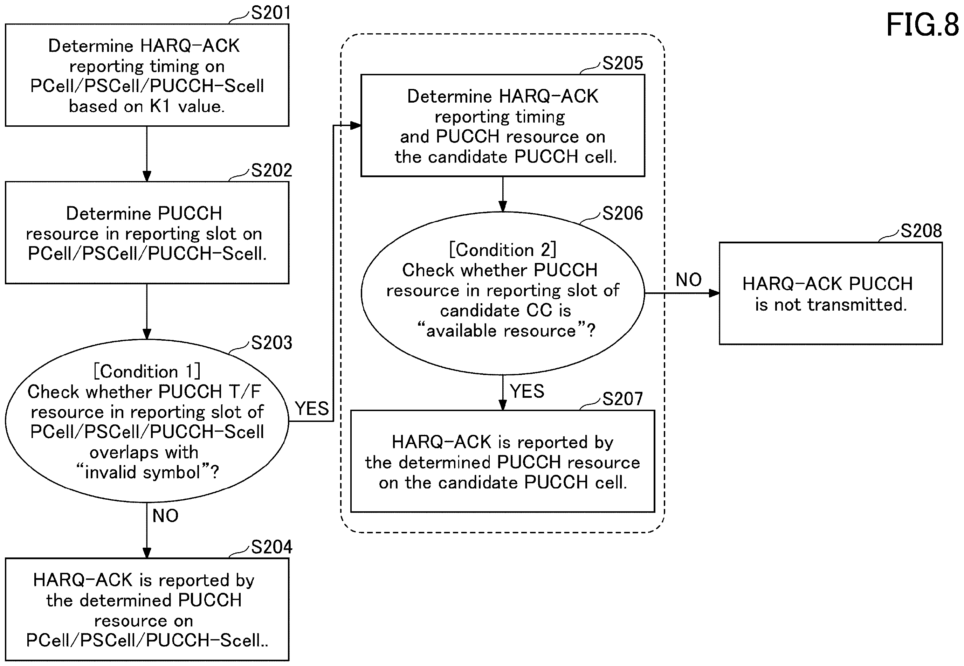

   Fig. 8 is a diagram illustrating an example of an operation of a terminal.
[Fig. 9]

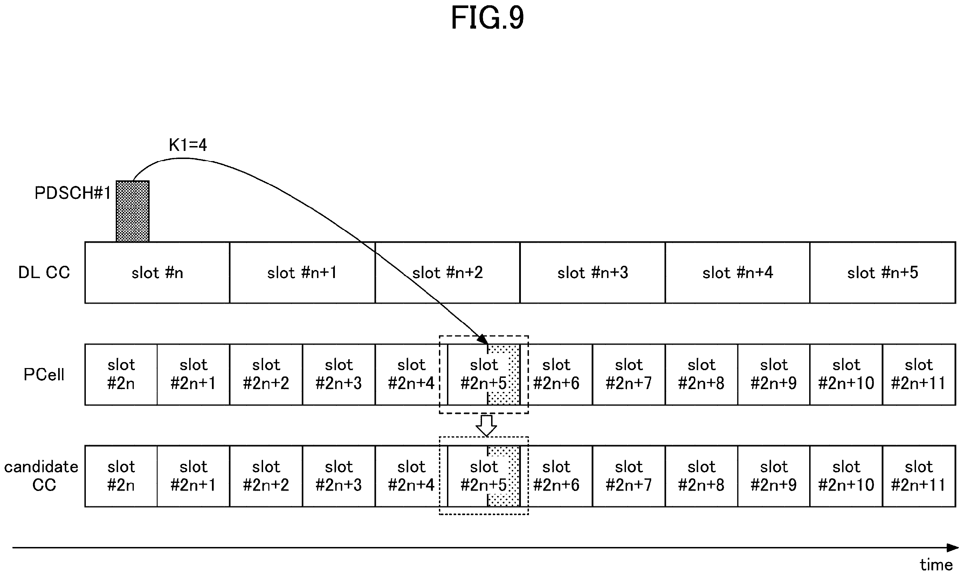

   Fig. 9 is a diagram illustrating an example of a case where same types of subcarrier spacing are applied.
[Fig. 10]

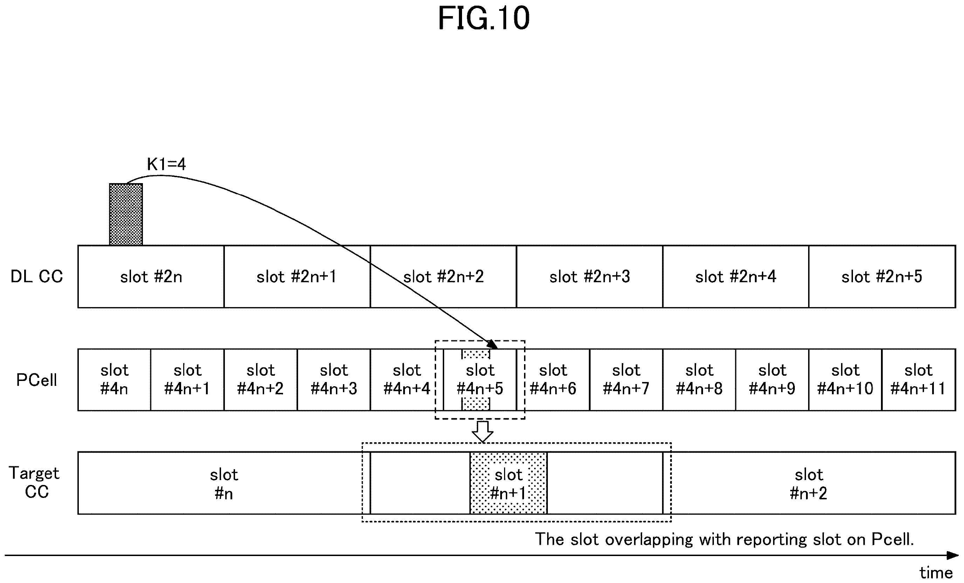

   Fig. 10 is a diagram illustrating an example of a case where different types of subcarrier spacing are applied.
[Fig. 11]

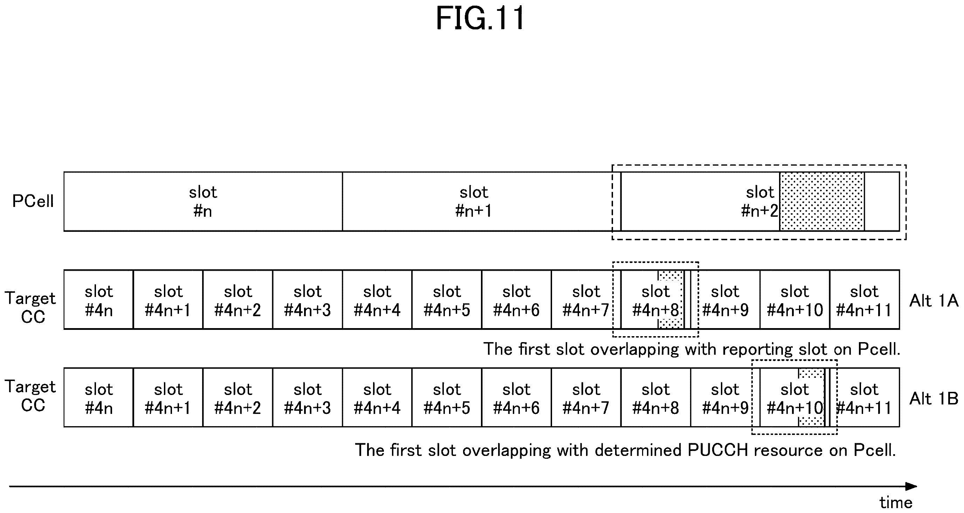

   Fig. 11 is a diagram illustrating an example of a case where different types of subcarrier spacing are applied.
[Fig. 12]

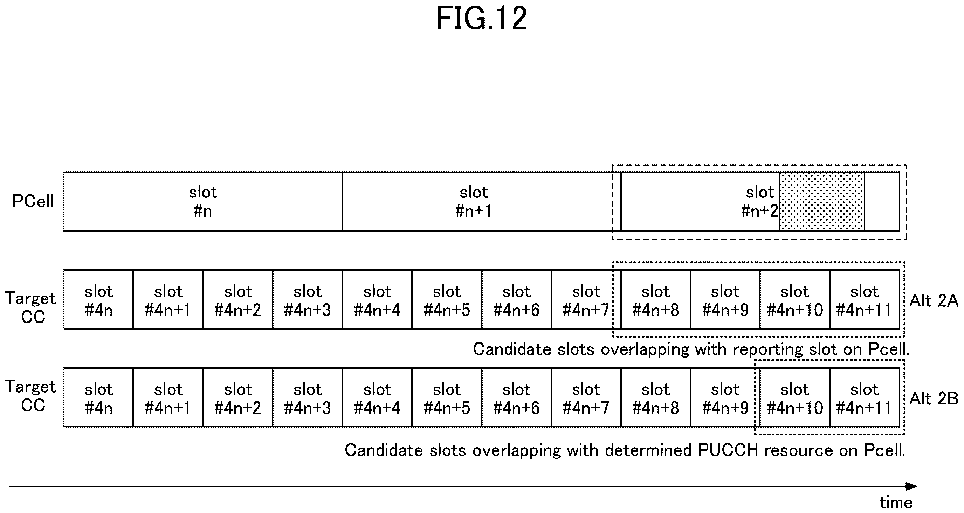

   Fig. 12 is a diagram illustrating an example of a case where different types of subcarrier spacing are applied.
[Fig. 13]

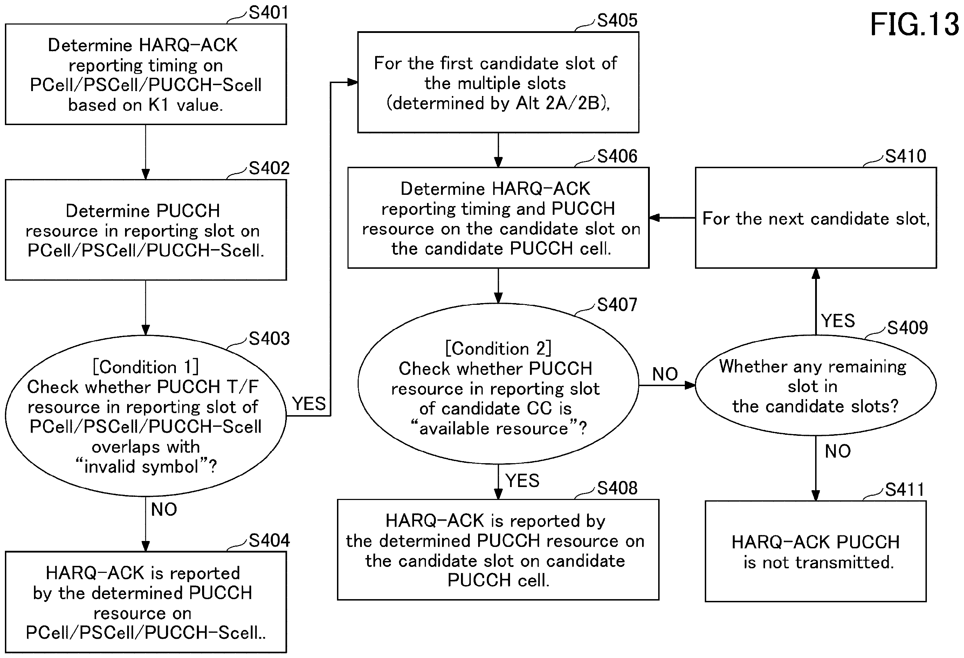

   Fig. 13 is a diagram illustrating an example of an operation of a terminal.
[Fig. 14]

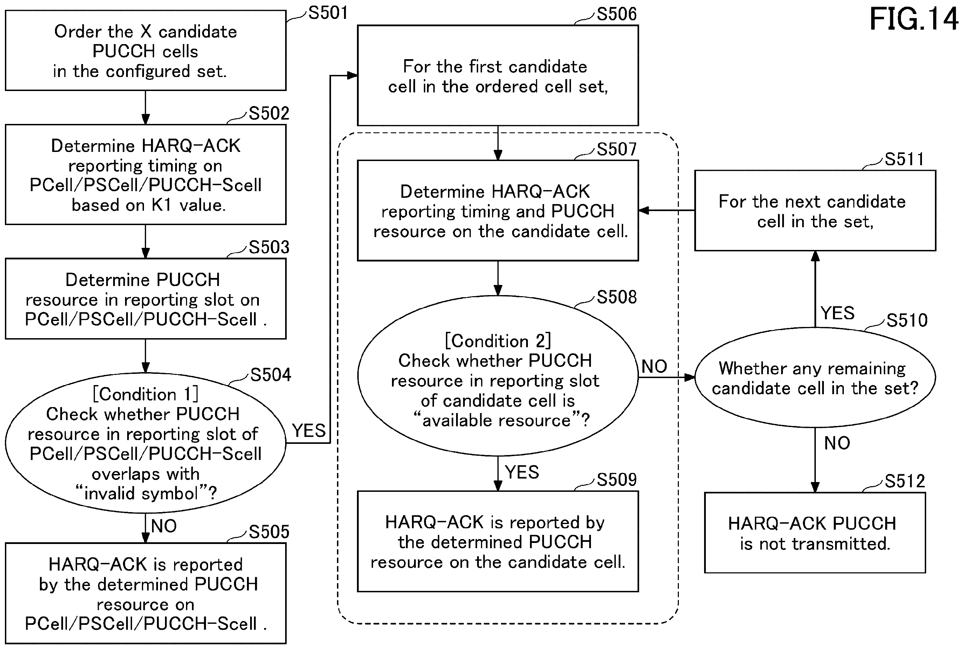

   Fig. 14 is a diagram illustrating an example of an operation of a terminal.
[Fig. 15]

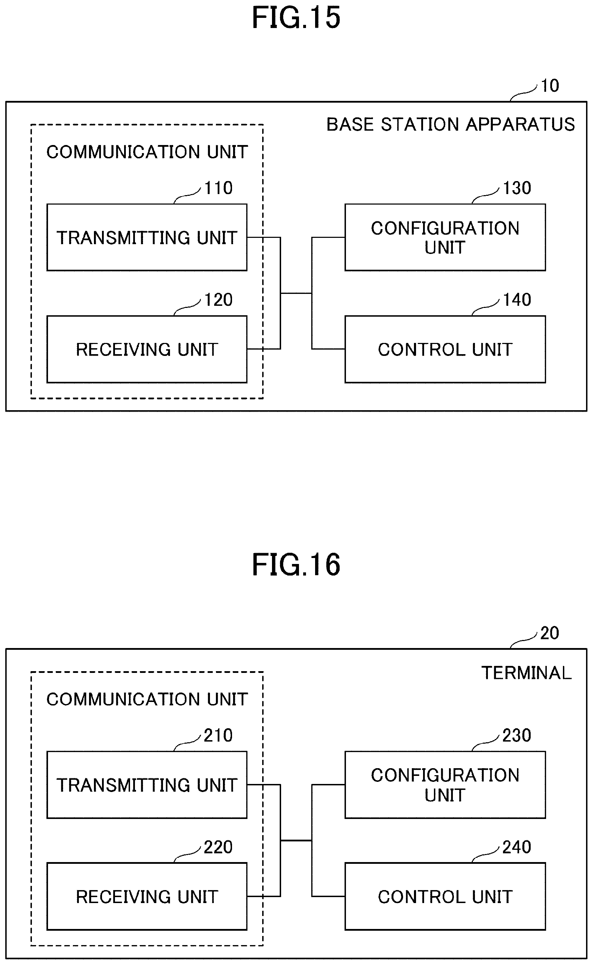

   Fig. 15 is a diagram illustrating an example of a functional configuration of a base station according to an embodiment of the present invention.
[Fig. 16]
   Fig. 16 is a diagram illustrating an example of a functional configuration of a terminal according to an embodiment of the present invention.
[Fig. 17]

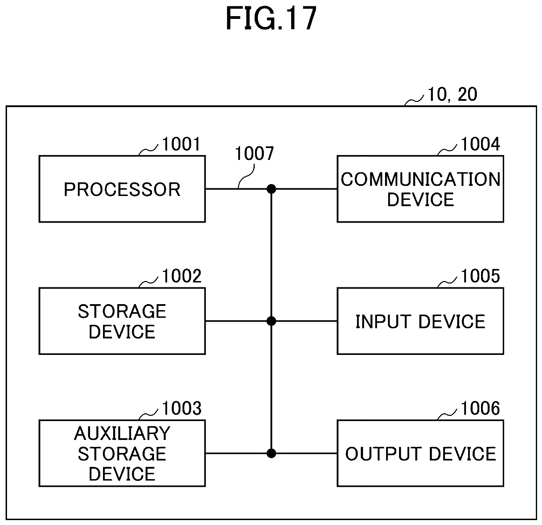

   Fig. 17 is a diagram illustrating an example of a hardware configuration of the base station or the terminal according to an embodiment of the present invention.

### [Description of Embodiments]

In the following, embodiments of the present invention are described with reference to the drawings. Note that, the embodiments described below are examples, and embodiments to which the present invention is applied are not limited to the following embodiments.

In operating a radio communication system according to an embodiment of the present invention, existing technology may be used as appropriate. The existing technology is, for example, an existing NR or LTE, but is not limited to the existing NR or LTE.

### (System Configuration)

Fig. 1 is a diagram illustrating a radio communication system according to an embodiment of the present invention. The radio communication system according to an embodiment of the present invention includes a base station 10 and a terminal 20, as illustrated in Fig. 1. In Fig. 1, one base station 10 and one terminal 20 are illustrated. However, this is an example, and there may be a plurality of base stations 10 and a plurality of terminals 20.

The base station 10 is a communication device that provides one or more cells and performs radio communication with the terminal 20. A physical resource of a radio signal is defined in a time domain and a frequency domain, the time domain may be defined by a number of OFDM symbols, and the frequency domain may be defined by a number of sub-carriers or a number of resource blocks. A Transmission Time Interval (TTI) in the time domain may be a slot, or the TTI may be a subframe.

The base station 10 can perform carrier aggregation in which communication is performed with the terminal 20 by bundling a plurality of cells (a plurality of component carriers (CCs)). For carrier aggregation, one primary cell (PCell) and one or more secondary cells (SCells) are used.

The base station 10 transmits synchronization signals, system information, and the like to the terminal 20. The synchronization signals are, for example, NR-PSS and NR-SSS. System information is transmitted, for example, on NR-PBCH or PDSCH, and is also called broadcast information. As illustrated in Fig. 1, the base station 10 transmits a control signal or data to the terminal 20 via Downlink (DL) and receives a control signal or data from the terminal 20 via Uplink (UL). Here, a signal transmitted on a control channel, such as a PUCCH or a PDCCH, is referred to as a control signal, and a signal transmitted on a shared channel, such as a PUSCH or a PDSCH, is referred to as data. However, such names are merely examples.

The terminal 20 is a communication device provided with a radio communication function, such as a smartphone, a cellular phone, a tablet, a wearable terminal, or a communication module for Machine-to-Machine (M2M). As illustrated in Fig. 1, the terminal 20 utilizes various types of communication services provided by a radio communication system by receiving control signals or data via DL from the base station 10 and transmitting control signals or data via UL to the base station 10. The terminal 20 may be referred to as a UE, and the base station 10 may be referred to as a gNB.

The terminal 20 can perform carrier aggregation in which communication is performed with the base station 10 by bundling a plurality of cells (a plurality of component carriers (CCs)). For the carrier aggregation, one primary cell (PCell) and one or more secondary cells (SCells) are used. A PUCCH-SCell having a PUCCH may also be used.

Fig. 2 illustrates an example of a configuration of a radio communication system in a case in which Dual connectivity (DC) is executed. As illustrated in Fig. 2, a base station 10A serving as a Master Node (MN) and a base station 10B serving as a Secondary Node (SN) are provided. Each of the base station 10A and the base station 10B is connected to a core network. The terminal 20 can communicate with both the base station 10A and base station 10B.

A cell group provided by the base station 10A that is a MN is called a Master Cell Group (MCG), and a cell group provided by the base station 10B that is an SN is called a Secondary Cell Group (SCG). Furthermore, in DC, a MCG includes one PCell and one or more SCells, and an SCG includes one Primary SCell (PSCell) and one or more SCells.

A processing operation in the embodiments may be executed in the system configuration illustrated in Fig. 1, in the system configuration illustrated in Fig. 2, or in a system configuration other than these system configurations.

### (Dual connectivity)

Fig. 3 is a diagram illustrating an example of dual connectivity (DC). In the example of Fig. 3, the base station 10-1 is a Master Node (MN). The base station 10-2 is a Secondary Node (SN). As illustrated in the example of Fig. 3, in the DC, carriers between different base stations are bundled.

In the example of Fig. 3, the base station 10-1 communicates with the terminal 20 via a primary cell (PCell) and secondary cells (SCells). In the example of Fig. 3, the terminal 20 establishes an RRC connection with base station 10-1.

In the case of DC, since there is a large delay in communication between the base station 10-1 and the base station 10-2, it is difficult to make real-time notification of uplink control information (UCI) received by the PCell of the base station 10-1 to the base station 10-2 via a backhaul link and to reflect the UCI in the scheduling of an SCell under control of the base station 10-2. Accordingly, in DC, in addition to the PCell of the base station 10-1, one carrier under control of the base station 10-2 is specified as a Primary SCell (PSCell) and PUCCH transmission is supported by the PSCell. Accordingly, as illustrated in the example of Fig. 3, the terminal 20 transmits UCI directly to base station 10-2 via the PSCell.

In the example of Fig. 3, the terminal 20 is configured with an SCell for the base station 10-1, in addition to a PCell. Furthermore, the terminal 20 is configured with an SCell for the base station 10-2, in addition to a PSCell. The terminal 20 transmits UCI for each carrier under control of the base station 10-1 with a PUCCH of the PCell. The terminal 20 also transmits UCI for each carrier under control of the base station 10-2 with a PUCCH of the PSCell. In the example of Fig. 3, a cell group (CG) under control of the base station 10-1 is referred to as a Master Cell-Group (MCG). The cell group under control of the base station 10-2 is referred to as a Secondary Cell-Group (SCG).

When DC is being performed, the terminal 20 transmits a PUCCH via a PCell, a PSCell, and/or a PUCCH-SCell. In general, it is not assumed that the terminal 20 transmits a PUCCH via an SCell other than a PCell, a PSCell, and a PUCCH-SCell.

The "PUCCH carrier switching" is being studied for the extension of Ultra-Reliable and Low Latency Communications (URLLC) technology in Release 17 of the 3GPP. The "PUCCH carrier switching" is being studied for the reduction of latency for Hybrid Automatic Repeat reQuest-ACKnowledgement (HARQ-ACK) feedback in a Time Division Duplex (TDD) method.

Fig. 4 is a diagram illustrating an example of the PUCCH carrier switching. In the example of Fig. 4, the base station 10 and the terminal 20 communicate via a cell 1 and a cell 2. In the example of Fig. 4, the cell 1 is a PCell and the cell 2 is an SCell.

In the example of Fig. 4, the terminal 20 receives data (receives a PDSCH) at the timing of S101. The terminal 20 attempts to transmit a HARQ-ACK for the data received at S101 at the timing of S102, but at the timing of S102, the slot of the cell 1 is a downlink (DL) slot. Accordingly, if the terminal 20 is to transmit a HARQ-ACK on the cell 1, the transmission of the HARQ-ACK is to be suspended until a transmission occasion of a PUCCH in the uplink (UL) slot (the timing of S103 in Fig. 4), which increases the latency of the HARQ-ACK transmission.

In the example in Fig. 4, the slot of the cell 2 is a UL slot at the timing of S102. In general, it is not assumed that terminal 20 transmits a PUCCH in an SCell. However, in the example in Fig. 4, if the terminal 20 can transmit the HARQ-ACK for the data received at S101 at the transmission occasion of a PUCCH at the timing of S102 in the cell 2, the latency of HARQ-ACK transmission can be reduced. URLLC requires, among other things, low latency in the wireless segment. For this reason, in the 3GPP, "PUCCH carrier switching" has been studied in which the terminal 20 changes a carrier for transmitting a PUCCH, as an extension of URLLC technology.

In the following embodiments, "same timing" may mean exactly the same timing, or it may mean that all or part of time resources (for example, one or more symbols (which may be resources in units of time shorter than the symbols) are the same or overlap.

The "PUCCH carrier switching" may mean that, if the terminal 20 attempts to transmit a PUCCH at a specific transmission timing of a PCell (which may be a PSCell or a PUCCH-SCell), since the slot at the specific transmission timing of the PCell (which may be the PSCell or the PUCCH-SCell) is a DL slot, the terminal 20 switches the cell for transmitting the PUCCH from the PCell (which may be the PSCell or the PUCCH-SCell) to an SCell from among one or more SCells such that a slot at the specific transmission timing is a UL slot (which may be an SCell other than the PSCell in the case of the PSCell, and which may be an SCell other than the PUCCH-SCell in the case of the PUCCH-SCell). In the embodiments of the present invention, a unit of a specific transmission timing is not limited to a slot. For example, a specific transmission timing may be a timing in units of subframes or a timing in units of symbols.

In the 3GPP meeting, two methods have been studied to implement the "PUCCH carrier switching." The first method is a method in which the base station 10 dynamically indicates a carrier for transmitting a PUCCH to the terminal 20. The second method is a method in which the base station 10 semi-statically configures a carrier for transmitting a PUCCH for the terminal 20. In the following embodiments, "a transmission of a PUCCH" and "to transmit a PUCCH" may mean that uplink control information is transmitted via a PUCCH.

In connection with the implementation of "PUCCH carrier switching," it is necessary to study a restriction on a candidate for a cell for transmitting a PUCCH, a setting method by using RRC signaling, an operation of the terminal 20, and the like.

### (Proposal 1)

For implementation of "PUCCH carrier switching," Option 1-1 and Option 1-2 below may be applied as a restriction on a candidate for a cell for transmitting a PUCCH.

### (Option 1-1)

The base station 10 need not necessarily apply any restriction to a candidate for a cell for transmitting a PUCCH.

For example, if the "PUCCH carrier switching" is to be performed in a MCG, the base station 10 may set any SCell of the MCG as a candidate for a cell with which the terminal 20 transmits a PUCCH, as long as a slot of the SCell at the timing to transmit a PUCCH in the PCell is set to a UL slot.

Similarly, if the "PUCCH carrier switching" is to be performed in an SCG, for example, the base station 10 may set any SCell other than the PSCell of the SCG as a candidate for a cell with which the terminal 20 transmits a PUCCH, as long as a slot of the SCell at the timing to transmit a PUCCH in the PSCell is set to a UL slot.

Similarly, if the "PUCCH carrier switching" is to be performed for a PUCCH-SCell, for example, the base station 10 may set any SCell other than the PUCCH-SCell from among SCells associated with the PUCCH-SCell as a candidate for a cell with which the terminal 20 transmits a PUCCH, as long as a slot of the SCell at the timing to transmit a PUCCH in the PUCCH-SCell is set to a UL slot.

In the case of Option 1-1, there is no special restriction on a candidate for a cell for transmitting a PUCCH, and, thus, it is possible to implement the "PUCCH carrier switching" more flexibly.

### (Option 1-2)

The base station 10 may apply a restriction on subcarrier spacing (SCS) to a candidate for a cell for transmitting a PUCCH.

For example, if the "PUCCH carrier switching" is to be performed in a MCG, the base station 10 may set, as a candidate cell for transmitting a PUCCH by the terminal 20, any SCell of one or more of SCells of the MCG with subcarrier spacing that is the same as the subcarrier spacing of the PCell, from among one or more SCells such that a slot of the SCell at the timing to transmit a PUCCH in the PCell is set to a UL slot.

Similarly, if the "PUCCH carrier switching" is to be performed in an SCG, the base station 10 may set any SCell other than the PSCell of one of one or more SCells of the SCG with subcarrier spacing that is the same as the subcarrier spacing of the PSCell, from among one or more SCells such that a slot of the SCell at the timing to transmit a PUCCH in the PSCell is set to a UL slot.

Similarly, if the "PUCCH carrier switching" is to be performed for a PUCCH-SCell, the base station 10 may set any SCell other than the PUCCH-SCell of one of one or more SCells associated with the PUCCH-SCell with subcarrier spacing that is the same as the subcarrier spacing of the PUCCH-SCell, from among one or more SCells such that a slot of the SCell at the timing to transmit a PUCCH in the PUCCH-SCell is set to a UL slot.

In this case, the slot length of the candidate cell for transmitting the PUCCH becomes the same as the slot length of the PCell (or the PSCell or the PUCCH-SCell), which simplifies the operation of changing a carrier compared to the case where slot lengths differ between carriers.

### (Option 1-2-1)

The base station 10 may select an SCell with a subcarrier spacing that is less than or equal to the subcarrier spacing of a PCell (or a PSCell or a PUCCH-SCell) as a candidate cell for transmitting a PUCCH.

### (Option 1-2-2)

The base station 10 may select an SCell with a subcarrier spacing that is greater than or equal to subcarrier spacing of a PCell (or a PSCell or a PUCCH-SCell) as a candidate cell for transmitting a PUCCH.

### (Proposal 2)

For performing the "PUCCH carrier switching," the base station 10 may set a candidate cell for transmitting a PUCCH for the terminal 20 by using RRC signaling.

### (Option 2-1)

The base station 10 may configure PUCCH resources for up to X cells (e.g., X = 1) other than a PCell, a PSCell, or a PUCCH-SCell per a cell group (a MCG, an SCG, or a PUCCH cell group).

For example, in the case of X = 1, if a specific time and frequency domain resource for a transmission of a PUCCH in a PCell, a PSCell, or a PUCCH-SCell overlaps with an invalid symbol for an uplink transmission, the terminal 20 may attempt to transmit the PUCCH through another cell in the corresponding cell group for which a PUCCH resource is configured.

Furthermore, in the case of X > 1, if a specific time and frequency domain resource for a transmission of a PUCCH for a PCell, a PSCell, or a PUCCH-SCell overlaps with an invalid symbol for uplink transmission, the terminal 20 may attempt to transmit the PUCCH through any cell of the other cells in the corresponding cell group for which PUCCH resources are configured.

### (Option 2-2)

The base station 10 may configure PUCCH resources for up to X (e.g., X = 1) cells other than a PCell, a PSCell or a PUCCH-SCell per a cell group (a MCG, an SCG, or a PUCCH cell group). In this case, the base station 10 may configure timing patterns for X + 1 cells so that the timing patterns are periodically applied to the terminal 20.

### (Option 2-2-1)

The timing pattern may indicate that any one of X + 1 cells can be used to transmit a PUCCH for each unit time (e.g., a slot) included in a specific time interval. For example, if a PUCCH is to be transmitted in a PCell, a PSCell, or a PUCCH-SCell, the terminal 20 may refer to the timing pattern to determine a cell for transmitting the PUCCH from among the X + 1 cells.

### (Option 2-2-2)

The timing pattern may indicate that a maximum of N (N is an integer less than or equal to X + 1) cells out of X + 1 cells can be used to transmit a PUCCH for each unit time (e.g., a slot) included in a specific time interval. For example, if a PUCCH is to be transmitted in a PCell, a PSCell, or a PUCCH-SCell, the terminal 20 may refer to the timing pattern to determine a cell for transmitting the PUCCH from among the X + 1 cells.

Fig. 5 is a diagram illustrating an example of the timing pattern. In the example of Fig. 5, the subcarrier spacing of the PCell is the same as the subcarrier spacing of the candidate cell (CC #1). In the example of Fig. 5, the TDD configuration set for the PCell is different from the TDD configuration set for CC #1. In the TDD configuration illustrated in Fig. 5, each slot is set for uplink transmission (U in Fig. 5), downlink transmission (D in Fig. 5), or switching (S in Fig. 5).

For a PCell, in the example of Fig. 5, in the slot marked U, the terminal 20 can transmit a PUCCH. Accordingly, as illustrated in Fig. 5, for the PCell, the bit of the timing pattern is set to 1 for the timing at which the slot is set to U. For the timing at which the slot is set to D and the timing at which the slot is set to S, the bit of the timing pattern is set to 0.

Similarly, for CC #1, in the example of Fig. 5, the terminal 20 can transmit a PUCCH in the slot denoted as U. Accordingly, as illustrated in Fig. 5, for CC #1, the bit of the timing pattern is set to 1 for the timing at which the slot is set to U. For the timing at which the slot is set to D and the timing at which the slot is set to S, the bit of the timing pattern is set to 0.

Fig. 6 is a diagram illustrating an example of the timing pattern. In the example of Fig. 6, the subcarrier spacing of the PCell is smaller than the subcarrier spacing of the candidate cell (CC #1). For the PCell, in the example of Fig. 6, the bit of the timing pattern is set to 1 for the timing at which the slot is set to U, and the bit of the timing pattern is set to 0 for the timing at which the slot is set to D and the timing at which the slot is set to S. Similarly, for CC #1, in the example of Fig. 6, the bit of the timing pattern is set to 1 for the timing at which the slot is set to U, and the bit of the timing pattern is set to 0 for the timing at which the slot is set to D and the timing at which the slot is set to S.

Fig. 7 is a diagram illustrating an example of the timing pattern. In the example of Fig. 7, the subcarrier spacing of the PCell is larger than the subcarrier spacing of the candidate cell (CC #1). For the PCell, in the example of Fig. 7, the bit of the timing pattern is set to 1 for the timing at which the slot is set to U, and the bit of the timing pattern is set to 0 for the timing at which the slot is set to D and the timing at which the slot is set to S. Similarly, for CC #1, in the example of Fig. 7, the bit of the timing pattern is set to 1 for the timing at which the slot is set to U, and the bit of the timing pattern is set to 0 for the timing at which the slot is set to D and the timing at which the slot is set to S.

Regarding the configuration of a PUCCH resource, Release 16 enables configuring of two PUCCH-Configs, which are high priority PUCCH-Config and low priority PUCCH-Config, for a PCell, a PSCell or a PUCCH-SCell. If two PUCCH-Configs are configured for a PCell, a PSCell, or a PUCCH-SCell, two PUCCH-Configs may be configured for the other X cells. If only one PUCCH-Config is configured for a PCell, a PSCell, or a PUCCH-SCell, one PUCCH-Config may be configured for the other X cells.

Accordingly, if the timings of two PUCCH transmissions obtained based on a high priority PUCCH-Config and a low priority PUCCH-Config that are configured for a PCell, a PSCell, or a PUCCH-SCell conflict, and the resources of the PCell, the PSCell, or the PUCCH-SCell at that timing are configured for downlink transmission, the terminal 20 may only transmit the PUCCH corresponding to the high priority PUCCH-Config of the configured two PUCCH-Configs in a cell from among the other X cells.

Regarding a configuration of a PUCCH resource, for Release 16, by using subslotLentthForPUCCH-r 16 in the PUCCH-Config, it can be specified whether the PUCCH resource is to be configured in units of slots or in units of subslots. If two PUCCH-Configs are configured for the other X cells, the configuration of subslotLentthForPUCCH-r 16 in each PUCCH-Config may be the same as the configuration of subslotLentthForPUCCH-r 16 in the corresponding PUCCH-Config of the same priority for the PCell, the PSCell, or the PUCCH-SCell.

For a TDD UL/DL pattern, if one or more UL symbols are semi-statically configured for a PCell, a PSCell, or a PUCCH-SCell, it need not be assumed that one or more UL symbols are configured for the other X cells at the same timing at which the one or more UL symbols are semi-statically configured. Furthermore, if one or more UL symbols are semi-statically configured for one cell out of the X cells, it need not be assumed that one or more UL symbols are configured for the other X - 1 cells at the same timing at which the one or more UL symbols are semi-statically configured.

### (Proposal 3)

For performing the "PUCCH carrier switching," the terminal 20 may perform an operation to determine whether to transmit a PUCCH in an SCell other than a PCell, a PSCell, or a PUCCH-SCell.

Fig. 8 is a diagram illustrating an example of the operation of the terminal 20 for performing the "PUCCH carrier switching." In the example of Fig. 8, it is assumed that the number of candidates for a cell to transmit a PUCCH is one (X = 1) .

At step S201, the terminal 20 determines, based on a K1 value, a timing to transmit a HARQ-ACK in a PCell, a PSCell, or a PUCCH-SCell. At step S202, the terminal 20 determines a PUCCH resource in a slot at the timing to transmit the HARQ-ACK in the PCell, the PSCell, or the PUCCH-SCell.

At step S203, the terminal 20 determines whether the PUCCH resource (time and frequency domain resource) determined at step S202 overlaps with an invalid symbol. If it is determined at step S203 that the PUCCH resource does not overlap an invalid symbol, the terminal 20 transmits a HARQ-ACK by using the determined PUCCH resource at step S204.

If it is determined at step S203 that the PUCCH resource overlaps with an invalid symbol, the terminal 20 determines, at step S205, a transmission timing of the HARQ-ACK and a PUCCH resource in the candidate for the cell to transmit the PUCCH.

At step S206, the terminal 20 determines whether the PUCCH resource in the candidate for the cell to transmit the PUCCH is a usable resource. If it is determined at step S206 that the PUCCH resource is a usable resource, the terminal 20 transmits a HARQ-ACK at step S207 with the PUCCH resource determined to be usable in the candidate for the cell to transmit the PUCCH.

If it is determined at step S206 that the PUCCH resource is not a usable resource, the terminal 20 does not transmit the HARQ-ACK at the PUCCH resource determined not to be usable in the candidate cell for transmitting the PUCCH at step S208.

In the example of Fig. 8, the "invalid symbol" may be a symbol that satisfies one or more of the following conditions A to I. Which of the following conditions A to I should be applied may be determined by a technical specification or may be configured by RRC.

Condition A: A symbol that is semi-statically configured for DL by tdd-UL-DL-ConfigurationCommon and/or tdd-UL-DL-ConfigurationDedicated.

Condition B: A symbol that is configured for receiving a synchronization signal block (SSB).

Condition C: A symbol that is configured for receiving Control Resource Set Zero (CORESET # 0).

Condition D: A symbol that is semi-statically configured as flexible, regardless of whether a slot format indicator (SFI) is configured or not.

Condition E: A symbol that is semi-statically configured as flexible regardless of an indication by an SFI when the SFI is configured.

Condition F: A symbol that is semi-statically configured as flexible and dynamically configured as flexible/DL by SFI.

Condition G: A symbol that is semi-statically configured for flexible for which an SFI is configured and an SFI is failed to receive.

Condition I: A symbol that is semi-statically configured for flexible and dynamically configured for DL reception by DCI.

Furthermore, the usable resource in Fig. 8 may be a PUCCH resource that does not overlap with an unusable symbol. Here, the "unusable symbol" may be a symbol that satisfies one or more of the above conditions A to I. Which of the conditions A to I is applied to the "unusable symbol" may be specified by a technical specification or configured by RRC. The condition applied to the "unusable symbol" may be the same as the condition applied to the "invalid symbol" or different from the condition applied to the "invalid symbol."

At step S205 of Fig. 8, the terminal 20 determines a HARQ-ACK transmission timing and a PUCCH resource in the candidate for the cell for transmitting the PUCCH. Three cases can be considered for the determination of the HARQ-ACK transmission timing and the PUCCH resource at step S205. The three cases are (1) a case where the subcarrier spacing of a PCell, a PSCell, or a PUCCH-SCell is the same as the subcarrier spacing of the candidate for the cell for transmitting the PUCCH, (2) a case where the subcarrier spacing of a PCell, a PSCell, or a PUCCH-SCell is greater than the subcarrier spacing of the candidate for the cell for transmitting the PUCCH, and (3) a case where the subcarrier spacing of a PCell, a PSCell, or a PUCCH-SCell is less than the subcarrier spacing of the candidate for the cell for transmitting the PUCCH.

Fig. 9 is a diagram illustrating an example of a case where the subcarrier spacing of a PCell, a PSCell, or a PUCCH-SCell is the same as the subcarrier spacing of the candidate cell for transmitting the PUCCH. In this case, the slot of the PCell, the PSCell, or the PUCCH-SCell may correspond one-to-one to the slot of the candidate cell for transmitting the PUCCH. Accordingly, the slot for transmitting the HARQ-ACK in the candidate cell for transmitting the PUCCH may be the slot corresponding to the slot in which the HARQ-ACK should be transmitted in the PCell.

Fig. 10 is a diagram illustrating an example of a case where the subcarrier spacing of the PCell, the PSCell, or the PUCCH-SCell is larger than the subcarrier spacing of the candidate cell for transmitting PUCCH. In this case, multiple slots of the PCell, the PSCell, or the PUCCH-SCell may correspond to one slot of the candidate cell for transmitting the PUCCH. Accordingly, the slot for transmitting the HARQ-ACK in the candidate cell for transmitting the PUCCH may be a slot that overlaps, in time, with the slot in which the HARQ-ACK should be transmitted in the PCell. In this case, multiple HARQ-ACKs to be transmitted in different multiple slots in the PCell, the PSCell, or the PUCCH-SCell may be transmitted in one slot in the candidate cell for transmitting the PUCCH. In this case, the terminal 20 need not assume that multiple HARQ-ACKs that should be transmitted in different multiple slots in the PCell, the PSCell, or the PUCCH-SCell may be transmitted in one slot in the candidate cell for transmitting the PUCCH. Alternatively, if the temporal condition of the HARQ-ACK (a condition determined by the timing indicated by the K-value) is satisfied, the terminal 20 may apply the HARQ-ACK codebook to transmit multiple HARQ-ACKs that should be transmitted in different multiple slots of the PCell, the PSCell, or the PUCCH-SCell in one slot in the candidate cell for transmitting the PUCCH.

Fig. 11 is a diagram illustrating a first example of the case where the subcarrier spacing of a PCell, a PSCell, or a PUCCH-SCell is smaller than the subcarrier spacing of the candidate cell for transmitting the PUCCH. In this case, one slot of the PCell, the PSCell, or the PUCCH-SCell overlaps in the time direction with multiple slots of the candidate cell for transmitting the PUCCH.

The determination of the HARQ-ACK transmission timing and the PUCCH resource at step S205 of Fig. 8 and the determination of whether the PUCCH resource in the candidate cell for transmitting the PUCCH is a usable resource at step S206 of Fig. 8 may be made for only one slot in the candidate cell for transmitting the PUCCH.

One slot in the candidate cell for transmitting the PUCCH may be any one of the multiple slots in the candidate cell for transmitting the PUCCH (for example, the first slot or the last slot from among the multiple slots) that overlap in time direction with the slot in the PCell, the PSCell, or the PUCCH-SCell in which the HARQ-ACK should be transmitted (Alt 1A in Fig. 11). Alternatively, one slot in the candidate cell for transmitting the PUCCH may be any one of the multiple slots in the candidate cell for transmitting the PUCCH (for example, the first slot or the last slot from among the multiple slots) that overlap in time direction with the resource in the PCell, the PSCell, or the PUCCH-SCell in which the PUCCH should be transmitted (Alt 1B in Fig. 11).

Fig. 12 is a diagram illustrating a second example of a case where the subcarrier spacing of the PCell, the PSCell, or the PUCCH-SCell is smaller than the subcarrier spacing of the candidate cell for transmitting the PUCCH. In this case, one slot of the PCell, the PSCell, or the PUCCH-SCell overlaps in the time direction with multiple slots of the candidate cell for transmitting the PUCCH.

The determination of the HARQ-ACK transmission timing and the PUCCH resource at step S205 of Fig. 8 and the determination of whether the PUCCH resource in the candidate cell for transmitting the PUCCH is a usable resource at step S206 of Fig. 8 may be made for multiple candidate slots in the candidate cell for transmitting the PUCCH.

The multiple candidate slots in the candidate cell for transmitting the PUCCH may be multiple slots in the candidate cell for transmitting the PUCCH that overlap in time direction with the slot in which the HARQ-ACK of the PCell, the PSCell, or the PUCCH-SCell should be transmitted (Alt 2A in Fig. 12). Alternatively, one slot in the candidate cell for transmitting the PUCCH may be multiple slots in the candidate cell for transmitting the PUCCH that overlap in time direction with the resource in which the PUCCH of the PCell, the PSCell, or the PUCCH-SCell should be transmitted (Alt 2B in Fig. 12).

Fig. 13 is a diagram illustrating an example in which the determination of the HARQ-ACK transmission timing and the PUCCH resource and the determination of whether the PUCCH resource is a usable resource are made for multiple candidate slots in the candidate cell for transmitting the PUCCH.

S401 to S404 in Fig. 13 may be the same as S201 to S204 in Fig. 8. At S405 in Fig. 13, the terminal 20 selects the first slot with respect to the time direction from among the multiple candidate slots (Alt 2A or Alt 2B in Fig. 12).

At step S406, the terminal 20 determines the HARQ-ACK transmission timing and the PUCCH resource in the candidate slot of the cell for transmitting the PUCCH.

At step S407, the terminal 20 determines whether the resource that should transmit the HARQ-ACK in the candidate for the cell for transmitting the PUCCH is a usable resource. If it is determined at step S407 that the PUCCH resource is a usable resource, the terminal 20 transmits the HARQ-ACK in the candidate slot that is determined to be usable in the candidate for the cell for transmitting the PUCCH at step S408.

If it is determined at step S407 that the PUCCH resource is not a usable resource, the terminal 20 determines at step S409 whether there is a candidate slot for which the determination at step S407 has not been made.

If it is determined at step S409 that there is a candidate slot for which the determination at step S407 has not been made, the terminal 20 selects the next slot in the time direction of the candidate slot for which the determination at step S407 has been made at step S410.

Subsequently, the terminal 20 repeats the processes from S406 to S410.

If it is determined at step S409 that there is no candidate slot for which the determination at step S407 has not been made, the terminal 20 does not transmit the HARQ-ACK in the PUCCH resource in the candidate for the cell for transmitting the PUCCH at step S411.

Fig. 14 is a diagram illustrating an example of the operation of the terminal 20 for performing the "PUCCH carrier switching." In the example in Fig. 14, it is assumed that the number of candidates for the cell for transmitting the PUCCH is greater than one (X > 1).

In the example of Fig. 14, the operation of the terminal 20 from step S502 to step S505 is the same as the operation of the terminal 20 from step S201 to step S204 in Fig. 8. Furthermore, in the example of Fig. 14, the operation of the terminal 20 from step S406 to step S408 is the same as the operation of the terminal 20 from step S205 to step S207 of Fig. 8.

The operation of the terminal 20 in the example of Fig. 14 differs from the operation of the terminal 20 in the example of Fig. 8 in that the operation of the terminal 20 in the example of Fig. 8 is performed for multiple candidates for the cell for transmitting the PUCCH. Specifically, at step S501 of Fig. 14, the terminal 20 arranges X candidates for the cell for transmitting the PUCCH in the configured set. At step S506, the terminal 20 selects the first candidate from among the X candidates for the cell for transmitting the PUCCH and makes the determinations at S507 and S508.

If it is determined at step S508 that the PUCCH resource is a usable resource, the terminal 20 transmits the HARQ-ACK with the PUCCH resource determined to be usable in the candidates for the cell for transmitting the PUCCH at step S509.

If it is not determined at step S508 that the PUCCH resource is a usable resource, the terminal 20 determines, at step S510, whether there is a candidate for the cell for transmitting the PUCCH for which the determination at step S508 has not been made.

If it is determined, at step S510, that there is a candidate for the cell for transmitting the PUCCH for which the determination at step S508 has not been made, the terminal 20 selects, at step S511, the candidate for the cell for transmitting the PUCCH next to the candidate for the cell for transmitting the PUCCH for which the determination at step S508 has been made.

Subsequently, the terminal 20 repeats the process from S507 to S511.

If it is determined at step S510 that there is no candidate slot for which the determination at step S508 has not been made, the terminal 20 does not transmit the HARQ-ACK in the PUCCH resource in the candidate for the cell for transmitting the PUCCH at step S512.

Note that the ordering of the X candidates for the cell for transmitting the PUCCH at step S501 of Fig. 14 may be performed based on indexes of the component carriers (CCs). For example, the ordering may be performed in ascending order of the indexes of CCs or in descending order of the indexes of CCs. Alternatively, the ordering of the X candidates for the cell for transmitting the PUCCH at step S501 of Fig. 14 may be performed based on the subcarrier spacing and the indexes of CCs if different types of subcarrier spacing are configured for the candidate SCells. For example, for each subcarrier spacing, the ordering may be performed first in ascending/descending order of the indexes of CCs and, subsequently, in ascending/descending order of the types of the subcarrier spacing.

For step S507 in Fig. 14, the operation of the terminal 20 may be defined by dividing two cases, similar to the case of Fig. 12.

### (Example of the operation of the terminal for Option 2-2-1)

For Option 2-2-1, the timing pattern indicates that any one of X + 1 cells can be used to transmit the PUCCH, for example, for each unit of time (for example, a slot) included in a specific time interval. The transmission of the PUCCH by the terminal 20 in this case may be performed, for example, as steps 1 to 4 below.

Step 1: The terminal 20 determines the HARQ-ACK transmission timing in the PCell (which may be the PSCell or the PUCCH-SCell) based on the K1 value.

Step 2: The terminal 20 determines the candidate CC corresponding to the HARQ-ACK transmission timing and timing pattern determined at step 1.

Step 3: The terminal 20 determines the HARQ-ACK transmission timing in the candidate CC.

Step 4: The terminal 20 determines the PUCCH resource in the candidate CC and transmits the PUCCH.

At step 2 above, the terminal 20 may directly determine the candidate CC based on the timing pattern.

As for step 3 above, the following three cases, which are case 1 to case 3, are considered.

Case 1: A case where the subcarrier spacing of the candidate CC is the same as the subcarrier spacing of the PCell (which may be the PSCell or the PUCCH-SCell). In this case, the operation of the terminal 20 may be the same as the operation described in Fig. 9.

Case 2: A case where the subcarrier spacing of the candidate CC is smaller than the subcarrier spacing of the PCell (which may be the PSCell or the PUCCH-SCell). In this case, the operation of the terminal 20 may be the same as the operation described in Fig. 10.

Case 3: A case where the subcarrier spacing of the candidate CC is greater than the subcarrier spacing of the PCell (which may be the PSCell or the PUCCH-SCell). In this case, the operation of the terminal 20 may be the same as the operation of Alt 1A or Alt 1B described in Fig. 11.

### (Example of the operation of the terminal for Option 2-2-2)

For Option 2-2-2, the timing pattern indicates that, for example, for each unit time (for example, a slot) included in a specific time interval, up to N (N is an integer less than or equal to X + 1) cells out of X + 1 cells can be used to transmit the PUCCH. The transmission of the PUCCH by the terminal 20 in this case may be performed, for example, as steps 1 to 4 below.

Step 1: The terminal 20 determines the HARQ-ACK transmission timing in the PCell (which may be the PSCell or the PUCCH-SCell) based on the K1 value.

Step 2: The terminal 20 determines the candidate list of the cell for transmitting the PUCCH corresponding to the HARQ-ACK transmission timing and timing pattern determined at step 1.

Step 3: The terminal 20 detects candidates for the cell for transmitting the PUCCH whose PUCCH resources in the determined time and frequency domain do not overlap with invalid symbols from the candidate list of the cell for transmitting the PUCCH.

Step 4: The terminal 20 transmits the PUCCH with the determined PUCCH resource in the selected cell for transmitting the PUCCH.

Note that in the above-described example, if subslot-based carrier switching is performed, the slots in Fig. 9 to Fig. 14 may be replaced with subslots.

The PUCCH carrier switching may be applied to a PUCCH for a Scheduling Request (SR) and/or a PUCCH for Channel State Information (CSI).

The type of UCI to which the PUCCH carrier switching is applied may be specified in a technical specification or configured by the RRC.

If the above-described embodiments are applied to the PUCCH for the SR and/or the PUCCH for the CSI, the HARQ-ACK PUCCH resource in the above-described embodiments may be replaced with the SR PUCCH resource and/or the CSI PUCCH resource.

From among the multiple options in the above-described embodiments, the option to be used may be configured by using a higher-layer parameter, may be transmitted to the base station 10 by the terminal 20 as UE capability, may be specified in a technical specification, and/or may be configured by using a higher-layer parameter and transmitted to the base station 10 as UE capability.

Information indicating whether the terminal 20 supports the PUCCH carrier switching may be specified as UE capability information of the terminal 20.

Information indicating whether the terminal 20 supports the PUCCH carrier switching based on a timing pattern may be specified as UE capability information of the terminal 20.

Information indicating whether the terminal 20 supports the PUCCH carrier switching based on a semi-static configuration may be specified as UE capability information of the terminal 20.

In the embodiments of the present invention, the examples are described in which, in any of the MCG, the SCG, or the PUCCH-SCell groups, if the slot at the timing at which the PUCCH should be transmitting in the corresponding PCell, PSCell, or PUCCH-SCell is set to DL, the PUCCH transmission is performed in the SCell in the corresponding cell group. However, the embodiments of the present invention are not limited to these examples. For example, if it is possible for the base station 10 to transmit, in real-time, the UCI received via the PUCCH to another base station 10 through a backhaul link and reflect the UCI in the scheduling of an SCell under the control of the other base station 10, the PUCCH may be transmitted by any cell outside the corresponding cell group if the slot at the timing for the PUCCH transmission by the corresponding PCell, PSCell, or PUCCH-SCell is set to DL in any of the MCG, SCG, or PUCCH-SCell groups.

### (Device configuration)

Next, an example of functional configurations of the base station 10 and the terminal 20 is described, which are for performing the process and the operation described above. The base station 10 and the terminal 20 include functions for implementing the above-described embodiments. However, each of the base station 10 and the terminal 20 may only include a proposed function of the above-described embodiments.

### <Base station 10>

Fig. 15 is a diagram illustrating an example of a functional configuration of the base station 10. As illustrated in Fig. 15, the base station 10 includes a transmitting unit 110; a receiving unit 120; a configuration unit 130; and a control unit 140. The functional configuration illustrated in Fig. 15 is merely an example. The functional division and the names of the functional units may be any division and names, provided that the operation according to the embodiments of the present invention can be executed. The transmitting unit 110 and the receiving unit 120 may be referred to as a communication unit.

The transmitting unit 110 includes a function for generating a signal to be transmitted to the terminal 20 and transmitting the signal through radio. The receiving unit 120 includes a function for receiving various signals transmitted from the terminal 20 and retrieving, for example, information of a higher layer from the received signals. The transmitting unit 110 is provided with a function to transmit NR-PSS, NR-SSS, NR-PBCH, DL/UL control signals, DL data, and the like, to the terminal 20.

The configuration unit 130 stores, in a storage device, preconfigured configuration information and various types of configuration information to be transmitted to the terminal 20, and reads out the information from the storage device, if necessary. The control unit 140 performs resource assignment, control of the entire base station 10, and the like. The functional unit related to signal transmission in the control unit 140 may be included in the transmitting unit 110, and the functional unit related to signal reception in the control unit 140 may be included in the receiving unit 120. Furthermore, the transmitting unit 110 may be referred to as a transmitter, and the receiving unit 120 may be referred to as a receiver.

### <Terminal 20>

Fig. 16 is a diagram illustrating an example of a functional configuration of the terminal 20. As illustrated in Fig. 16, the terminal 20 includes a transmitting unit 210; a receiving unit 220; a configuration unit 230; and a control unit 240. The functional configuration illustrated in Fig. 16 is merely an example. The functional division and the names of the functional units may be any division and names, provided that the operation according to the embodiments of the present invention can be executed. The transmitting unit 210 and the receiving unit 220 may be referred to as a communication unit.

The transmitting unit 210 creates a transmission signal from transmission data and transmits the transmission signal through radio. The receiving unit 220 receives various signals through radio and retrieves higher layer signals from the received physical layer signals.

The configuration unit 230 stores, in a storage device, various types of configuration information received by the receiving unit 220 from the base station 10, and reads out the information from the storage device, if necessary. Furthermore, the configuration unit 230 stores preconfigured configuration information. The control unit 240 performs control or the like of the entire terminal 20. A functional unit related to signal transmission in the control unit 240 may be included in the transmitting unit 210, and a functional unit related to signal reception in the control unit 240 may be included in the receiving unit 220. Furthermore, the transmitting unit 210 may be referred to as a transmitter, and the receiving unit 220 may be referred to as a receiver.

In the embodiments, at least, the terminal, the communication method, and the radio communication system below are described.

### (Item 1)

A terminal including
a receiving unit that receives configuration information to change, in a cell group, a cell for transmitting uplink control information;
a control unit that sets, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission; and
a transmitting unit that transmits the uplink control information via the cell set by the control unit, at the timing to transmit the uplink control information.

### (Item 2)

The terminal according to item 1, wherein the configuration information specifies, as a candidate for the cell other than the specific cell, one or more secondary cells with subcarrier spacing that is same as subcarrier spacing of the specific cell, from among one or more secondary cells in the cell group.

### (Item 3)

The terminal according to item 1, wherein the configuration information includes a timing pattern indicating, for each timing in a specific transmission interval, whether a resource of each cell included in the cell group is assigned to an uplink transmission, and the control unit sets, based on the timing pattern, a cell for which a resource at the timing to transmit the uplink control information is assigned to an uplink transmission, as the cell for transmitting the uplink control information.

### (Item 4)

The terminal according to item 1, wherein the specific cell is a primary cell, a primary secondary cell, or a Physical Uplink Control Channel (PUCCH)-secondary cell.

### (Item 5)

A communication method executed by a terminal, the method including
receiving configuration information to change, in a cell group, a cell for transmitting uplink control information;
setting, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission; and
transmitting the uplink control information via the set cell at the timing to transmit the uplink control information.

### (Item 6)

A radio communication system including
a base station; and
a terminal,
wherein the base station includes
a transmitting unit that transmits configuration information to change, in a cell group, a cell for transmitting uplink control information, and
wherein the terminal includes
a receiving unit that receives the configuration information to change, in the cell group, the cell for transmitting the uplink control information,
a control unit that sets, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission, and
a transmitting unit that transmits the uplink control information via the cell set by the control unit at the timing to transmit the uplink control information.

By the configuration described in any of the above-described items, an operation or the like of a terminal for implementing "PUCCH carrier switching" is clarified.

### (Hardware configuration)

The block diagrams (Fig. 15 and Fig. 16) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire or radio) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

For example, the base station 10, the terminal 20, or the like in an embodiment of the present disclosure may function as a computer for performing a process of the radio communication method according to the present disclosure. Fig. 17 is a diagram illustrating an example of a hardware configuration of the base station 10 and the terminal 20 according to an embodiment of the present disclosure. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station 10 and the terminal 20 may be configured to include each device depicted, or may be configured without including some devices.

Each function in each of the base station 10 and the terminal 20 is implemented such that predetermined software (program) is read on hardware, such as the processor 1001, the storage device 1002, and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a Central Processing Unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station 10 illustrated in Fig. 15 may be implemented by a control program which is stored in the storage device 1002 and operates on the processor 1001. Furthermore, for example, the control unit 240 of the terminal 20 illustrated in Fig. 16 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and may be configured with, for example, at least one of a Read Only Memory (ROM), an Erasable Programmable ROM (EPROM), an Electrically Erasable Programmable ROM (EEPROM), a Random Access Memory (RAM), and the like. The storage device 1002 may also be referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a Compact Disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described auxiliary storage device 1003 may be referred to as a secondary storage. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as, for example, a "network device," a "network controller," a "network card," a "communication module," or the like. The communication device 1004 may be configured to include a high frequency switch, a duplexer, a filter, a frequency synthesizer, and the like to implement at least one of frequency division duplex (FDD: Frequency Division Duplex) and time division duplex (TDD: Time Division Duplex). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally formed (such as a touch panel).

The devices, such as the processor 1001 and the storage device 1002, are connected by the bus 1007 for communicating information. The bus 1007 may be configured with a single bus or may be configured with different buses between the devices.

Furthermore, each of the base station 10 and the terminal 20 may be configured to include hardware, such as a microprocessor, a digital signal processor (DSP: Digital Signal Processor), an Application Specific Integrated Circuit (ASIC), a Programmable Logic Device (PLD), or a Field Programmable Gate Array (FPGA), or all or some of the functional blocks may be implemented by the hardware. For example, the processor 1001 may be implemented by at least one of these hardware components.

### (Supplemental embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the base station 10 and the terminal 20 are described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by using any other method. For example, the notification of information may be provided by physical layer signalling (for example, Downlink Control Information (DCI) or Uplink Control Information (UCI)), higher layer signaling (for example, Radio Resource Control (RRC) signaling, Medium Access Control (MAC) signaling, broadcast information (Master Information Block (MIB), System Information Block (SIB)), other signals, or a combination thereof. Furthermore, the RRC signaling may be referred to as an RRC message and may be, for example, an RRC Connection Setup message, an RRC Connection Reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), new Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The order of the processing procedures, the order of the sequences, the order of the flowcharts, and the like of the respective aspects/embodiments described in this specification may be changed, provided that there is no contradiction. For example, the method described in the present disclosure presents elements of various steps with an exemplary order and is not limited to a presented specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Information, a signal, or the like described in the present disclosure may be output from a higher layer (or a lower layer) to a lower layer (or a higher layer). Information, a signal, or the like described in the present disclosure may be input and output via a plurality of network nodes.

Input and output information and the like may be stored in a specific place (for example, a memory) or may be managed by using a management table. Input and output information and the like may be overwritten, updated, or additionally written. Output information and the like may be deleted. Input information and the like may be transmitted to another device.

The determination in the present disclosure may be made in accordance with a value (0 or 1) indicated by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL: Digital Subscriber Line)) and a radio technology (such as infrared rays or a microwave), at least one of the wired technology and the radio technology is included in a definition of a transmission medium.

Information, signals, and the like described in the present disclosure may be expressed using any one of a variety of different techniques. For example, data, instructions, commands, information, signals, bits, symbols, chips, and the like which are mentioned throughout the above description may be expressed by voltages, currents, electromagnetic waves, magnetic fields or magnetic particles, optical fields or photons, or any combination thereof.

The terms described in the present disclosure and terms necessary for understanding the present disclosure may be replaced with terms having the same or similar meanings. For example, at least one of a channel and a symbol may be a signal (signalling). Furthermore, a signal may be a message. Furthermore, a component carrier (CC: Component Carrier) may be referred to as a "carrier frequency," a "cell," a "frequency carrier," or the like.

The terms "system" and "network" used in the present disclosure are used interchangeably.

Furthermore, information, parameters, and the like described in the present disclosure may be expressed by using absolute values, may be expressed by using relative values from predetermined values, or may be expressed by using any other corresponding information. For example, radio resources may be those indicated by an index.

The names used for the above-described parameters are not limited names in any point of view. Furthermore, mathematical formulas or the like using the parameters may be different from those explicitly disclosed in the present disclosure. Since various channels (for example, a PUSCH, a PUCCH, a PDCCH, and the like) and information elements can be identified by any suitable names, various names assigned to the various channels and the information elements are not limited names in any point of view.

In the present disclosure, the terms "base station (BS: Base Station)," "radio base station," "base station," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term, such as a macrocell, a small cell, a femtocell, and a picocell.

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS: Mobile Station)," "terminal (user terminal)," "terminal (UE: User Equipment)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device that need not move during a communication operation. For example, at least one of the base station and the mobile station may be an Internet of Things (IoT) device such as a sensor.

Furthermore, the base station in the present disclosure may be replaced with a terminal. For example, each aspect/embodiment of the present disclosure may be applied to a configuration in which communication between the base station and the terminal is replaced with communication between a plurality of terminals 20 (for example, which may be referred to as Device-to-Device (D2D) or Vehicle-to-Everything (V2X)). In this case, the terminal 20 may have the functions of the base station 10 described above. Furthermore, the terms "uplink" and "downlink" may be replaced with terms (for example, "side") corresponding to inter-terminal communication. For example, an uplink channel, a downlink channel, or the like may be replaced with side channels.

Similarly, the terminal in the present disclosure may be replaced with the base station. In this case, the base station may have the functions of the above-described terminal.

The terms "determination(determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS (Reference Signal) and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation, such as "first" or "second," used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Furthermore, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS: SubCarrier Spacing), a bandwidth, a symbol length, a cyclic prefix length, a transmission time interval (TTI: Transmission Time Interval), a number of symbols per TTI, a radio frame configuration, a specific filtering process performed in the frequency domain by a transceiver, a specific windowing process performed in the time domain by a transceiver, and the like.

The slot may include one or more symbols (Orthogonal Frequency Division Multiplexing (OFDM) symbols, Single Carrier Frequency Division Multiple Access (SC-FDMA) symbols, or the like) in the time domain. The slot may be a time unit based on the numerology.

The slot may include a plurality of mini slots. Each mini slot may include one or more symbols in the time domain. Furthermore, the mini slot may be referred to as a sub-slot. The mini slot may include fewer symbols than a slot. A PDSCH (or PUSCH) transmitted in a unit of time greater than a mini slot may be referred to as a PDSCH (or PUSCH) mapping type A. A PDSCH (or PUSCH) transmitted using a mini slot may be referred to as a PDSCH (or PUSCH) mapping type B.

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal 20) to each terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Furthermore, when a TTI is provided, a time interval (for example, the number of symbols) in which a transport block, a code block, a code word, or the like is actually mapped may be shorter than the TTI.

When one slot or one mini slot is referred to as a TTI, one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. One TTI, one subframe, or the like may be formed of one or more resource blocks.

Furthermore, one or more RBs may be referred to as a physical resource block (PRB: Physical RB), a sub carrier group (SCG: Sub-Carrier Group), a resource element group (REG: Resource Element Group), a PRB pair, an RB pair, or the like.

Furthermore, the resource block may be formed of one or more resource elements (RE: Resource Element). For example, one RE may be a radio resource region of one subcarrier and one symbol.

A bandwidth part (BWP: Bandwidth Part) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted similarly to "different."

Each aspect/embodiment described in the present disclosure may be used alone, in combination, or may be switched in accordance with the execution. Furthermore, notification of predetermined information (for example, notification of "being X") is not limited to notification performed explicitly, but may be performed implicitly (for example, not notifying the predetermined information).

In the present disclosure, an SS block or a CSI-RS is an example of a synchronization signal or a reference signal.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### [Reference Signs List]

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a receiving unit that receives configuration information to change, in a cell group, a cell for transmitting uplink control information;
a control unit that sets, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission; and
a transmitting unit that transmits the uplink control information via the cell set by the control unit, at the timing to transmit the uplink control information.

2. The terminal according to claim 1, wherein the configuration information specifies, as a candidate for the cell other than the specific cell, one or more secondary cells with subcarrier spacing that is same as subcarrier spacing of the specific cell, from among one or more secondary cells in the cell group.

3. The terminal according to claim 1, wherein the configuration information includes a timing pattern indicating, for each timing in a specific transmission interval, whether a resource of each cell included in the cell group is assigned to an uplink transmission, and the control unit sets, based on the timing pattern, a cell for which a resource at the timing to transmit the uplink control information is assigned to an uplink transmission, as the cell for transmitting the uplink control information.

4. The terminal according to claim 1, wherein the specific cell is a primary cell, a primary secondary cell, or a Physical Uplink Control Channel (PUCCH)-secondary cell.

5. A communication method executed by a terminal, the method comprising:
receiving configuration information to change, in a cell group, a cell for transmitting uplink control information;
setting, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission; and
transmitting the uplink control information via the set cell at the timing to transmit the uplink control information.

6. A radio communication system comprising:
a base station; and
a terminal,
wherein the base station includes
a transmitting unit that transmits configuration information to change, in a cell group, a cell for transmitting uplink control information, and
wherein the terminal includes
a receiving unit that receives the configuration information to change, in the cell group, the cell for transmitting the uplink control information,
a control unit that sets, if a resource at a timing to transmit the uplink control information is not assigned to an uplink transmission in a specific cell for transmitting the uplink control information in the cell group, a cell other than the specific cell in the cell group as the cell for transmitting the uplink control information based on the configuration information, wherein, in the cell other than the specific cell, a resource at the timing to transmit the uplink control information is assigned to an uplink transmission, and
a transmitting unit that transmits the uplink control information via the cell set by the control unit at the timing to transmit the uplink control information.
